(19) Europäisches Patentamt
European Patent Office
Office européen des brevets

(11) **EP 4 685 713 A1**

(12) **EUROPEAN PATENT APPLICATION**

(43) Date of publication:
**28.01.2026   Bulletin 2026/05**

(21) Application number: **24306225.4**

(22) Date of filing: **22.07.2024**

(51) International Patent Classification (IPC):
**G06Q 10/06** $^{(2023.01)}$        **G06Q 50/02** $^{(2024.01)}$
**A01B 79/00** $^{(2006.01)}$

(52) Cooperative Patent Classification (CPC):
**G06Q 50/02; A01B 79/005; G06Q 10/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vilmorin & Cie**
**75001 Paris (FR)**

(72) Inventor: **VERDENAL, Alban**
**63122 CEYRAT (FR)**

(74) Representative: **Plasseraud IP**
**104 Rue de Richelieu**
**CS92104**
**75080 Paris Cedex 02 (FR)**

(54) **METHOD, IMPLEMENTED BY COMPUTER, FOR DYNAMICALLY MONITORING CROP DEVELOPMENT OF PLANT VARIETY(IES) VX OF GIVEN SPECIES EX AND DIGITAL TOOLS THEREFORE**

(57)     The invention is to provide a method, implemented by computer, for dynamic monitoring of the production of an agricultural plot ($P^x$) on which develops at least one plant variety $V^x$ of a given species $E^x$.

For this purpose, the method consists in calculating and making available a theoretical optimal development profile (TODP: comparison standard) for $P^x$ NDVI profiles, enabling their operational interpretation in the form of a theoretical optimum profile. This calculation relies on agronomic, meteorological and satellite imagery data. The method also includes comparing the TODP with the $V^x$ development actually observed on $P^x$, so as to enable anomalies to be detected. This anomaly detection will enable the farmer to take corrective action such as irrigation, reseeding targeted areas, additional nitrogen application, etc.

The invention also pertains to a computer program comprising a series of instructions which, when executed by a processor, implement a method according to the invention.

FIG. 3

**Description**

**Field of the Invention**

The field of the invention is that of Precision, Smart and Digital Agriculture (PSDA), and more specifically that of monitoring crop development by aerial imagery, i.a satellite imagery.

The invention is a method, implemented by computer, for dynamically monitoring of the production of at least one agricultural plot ($P^x$) on which develops at least one plant variety $V^x$ of a given species $E^x$.

The invention also covers a computer program for implementing this method, an electronic device, a system and a data carrier comprising this program.

**Technology background** - **Technical problem**

PSDA consists of implementing technological means to optimize yields and manage inputs within agricultural plots, in which various plant varieties belonging to different species are cultivated. These technological means aim to optimize the management of agricultural plots both, from an agronomic point of view to rationalize the supply of inputs and thus control production costs, and from an environmental point of view to preserve natural resources. These inputs are notably water fertilizers and soil improvers, phytosanitary products, i.e pesticides used to eradicate crop pests, growth activators or retardants, seeds, seedlings...

As management strategy of inputs in a field according to actual crop needs, PSDA relies on observing, measuring and responding to temporal and spatial variability to improve agricultural production sustainability. It involves data-based technologies, including satellite positioning systems like GPS, remote sensing and the Internet, to manage crops and use of inputs. These data feed digital techniques (prescription processors) to monitor and optimize agricultural production processes. Instead of applying an equal amount of inputs over an entire field, PSDA involves measuring the within-field soil variations and adapting the inputs strategy accordingly.

The data collected and usable in PSDA include aerial imagery, in particular those coming from earth observation satellites, which have been in orbit since the 1970s, with on-board multispectral sensors, offer the opportunity to remotely measure the 'vigour' of 'photographed' plants, by means of vegetation indices.

In concrete terms, as plant chlorophyll preferentially absorbs photons traveling in the range of light wavelengths that humans perceive as red and blue, plants tend to reflect and diffuse around it light whose spectrum is modified (with less red and blue - so visible as green to the naked eye) compared to the incident spectrum from solar illumination.

Thus, by analyzing the light reflected by plants (reflectance), it is possible to deduce the quantity of radiation absorbed, and therefore the quantity of chlorophyll contained, which is a good indicator of the quantity of biomass present or its "greenness".

Since satellite sensors measure reflectance intensity in different bands of the light spectrum, it is possible to combine these values to calculate indices correlated with vegetation condition. In theory, therefore, a multitude of indices could exist. One of the most widely used indices for this purpose, and well known to industry professionals, is the NDVI (Normalized Difference Vegetation Index), which calculates a ratio of the relative intensity of the red (R : wavelength circa 660 nm) and near infrared (NIR : wavelength circa 770 nm) bands, using the simple formula:

$$NDVI=(NIR-R)/(NIR+R).$$

For plants, the value of this NDVI index is, by construction, between 0 and 1, with 0 corresponding to an area of little green or poorly developed vegetation, and 1 corresponding to a very green or well-developed area.

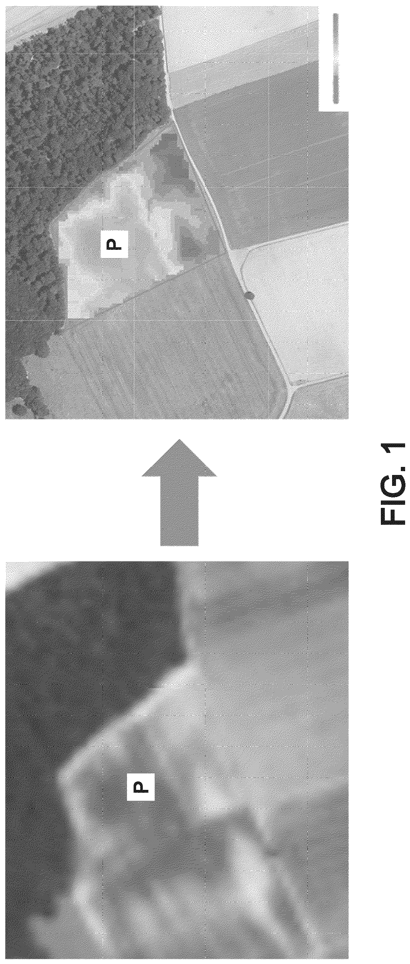

Enclosed Figure 1 is a satellite image of an agricultural plot (P) on June 23, 2023 in 'real' color (Black&White on Figure 1) and converted into an NDVI signal level map. Areas with strong vegetative development (very green -grey in B&W) have a high NDVI level, areas with weak development (bare soil) have a low NDVI level.

The calculation of this vegetation index therefore enables remote measurement of the state of crop development, both in terms of the average at a given time t, but also in terms of its variability in space (mapping) and its temporal evolution.

Understanding the temporal evolution of a plot's NDVI level over the course of its growing season is particularly useful for monitoring the progress of its development cycle and taking corrective action e.g through inputs, if necessary.

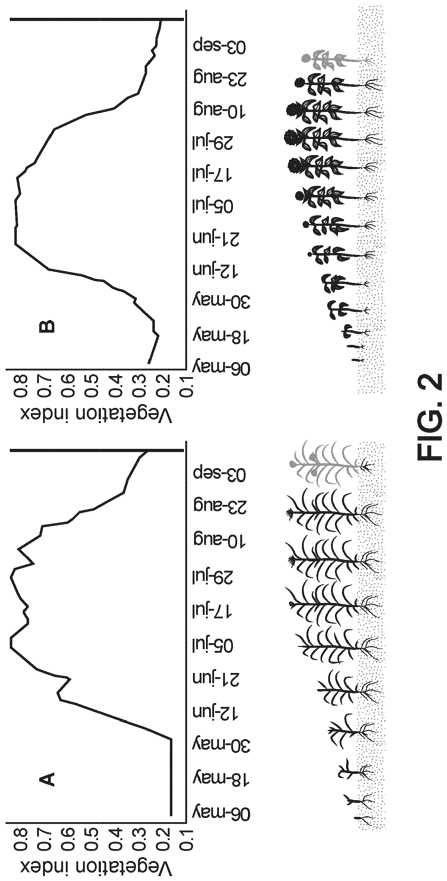

Enclosed Figure 2 represents the temporal evolution profiles of NDVI level on a plot P of A. Corn and B. Sunflower, from sowing to plant maturity, compared with the corresponding development stages. Typically, the average NDVI level of a plot of maize or sunflower shows a bell-shaped curve (Figure 2), reflecting the crop's development phases: the signal increases after sowing during plant growth until flowering and the end of new leaf emission, then stabilizes during the grain filling phase, and finally decreases as the plants mature, turning yellow as they wilt.

This curve of NDVI level evolution over the season is named NDVI profile, because its bell-shape is characteristic of plant development, depending on their genetics and growing conditions (weather, pests, etc.). It is a signature of the growing season for the plot in question. Thus, the bell of the bell-shaped curve may be higher or lower, longer or shorter, etc.

Crop monitoring using satellite indices such as NDVI is a widespread practice in the world of agriculture and is offered on the market by a number of players.

Despite the growing interest in and use of NDVI thanks to the launch of numerous satellite constellations for monitoring these profiles, a major problem with its technical and operational use by farmers lies in its interpretability.

Indeed, in the absence of reference data, it is very difficult to qualify a measured NDVI level, i.e. to transform an observation such as: "NDVI is low today" into a true understanding such as: "NDVI is low today, and that's bad". It is therefore difficult to go from reading "Signal high/Signal low" to understanding "Signal good/Signal bad".

So it's clear that to be truly interpretable, the NDVI signal and the biomass level it captures need to be put into context (what plant species is concerned, at what stage of development, etc.) and set against a norm (what 'good' or 'bad' development looks like for this species specifically at this particular stage).

**Objectives of the invention**

In this context, the invention aims at addressing at least one of the above problems and/or needs, through fulfilling at least one of the following objectives:

-O1-   Providing a method, implemented by computer, for dynamically monitoring of the production of an agricultural plot ($P^x$) on which develops at least one plant variety $V^x$ of a given species $E^x$, based on profiles of indicators of $V^x$ plant biomass produced on $P^x$ (vegetation indices) as obtained by aerial imagery, preferably NDVI, wherein comparison standard biomass indicators profiles (theoretical optimum profiles) are available for the sake of comparison with actually observed biomass indicators profiles, to detect in real time divergences between these 2 kinds of profiles and making it possible to take corrective action to tend towards the theoretical optimum profiles.

-O2-   Providing a method, implemented by computer, for remotely monitoring of the production of an agricultural plot ($P^x$) on which develops at least one plant variety $V^x$ of a given species $E^x$, based on profiles of indicators of $V^x$ plant biomass produced on $P^x$ (vegetation indices) as obtained by aerial imagery, preferably NDVI, wherein comparison standard biomass indicators profiles (theoretical optimum profiles) are available for the sake of comparison with actually observed biomass indicators profiles, to detect in real time divergences between these 2 kinds of profiles and making it possible to take corrective action to tend towards the theoretical optimum profiles.

-O3-   Providing a method as defined in O1 which is simple to implement for the farmer.

-O4-   Providing a method as defined in O1 which is cheap.

-O5-   Providing a method as defined in O1 which is high-performance PSDA monitoring.

-O6-   Providing a method as defined in O1 which is environmentally friendly.

-O7-   Providing a method as defined in O1 which makes it possible to enhance crops yield in an ecocompatible & economical way.

-O8-   Providing a method as defined in O1 which makes it possible to adapt cultivation practices to the monitored plots, and also to the considered species as well as to the specific characteristics of the genetics employed in these species.

-O9-   Providing a method as defined in O1 which makes it possible to detect temporal deviations (development drifts) or spatial deviations (areas of plots showing abnormal behavior).

-O10-   Providing a computer program for implementing the method according to at least one of the above objectives.

-O11-   Providing an electronic device for implementing the method according to at least one of the above objectives.

-O12-   Providing a system comprising the electronic device for implementing the method according to at least one of the above objectives.

-O13-   Providing a data carrier on which at least one computer program according to the invention is recorded.

**Summary of the invention**

It follows that the invention pertains to a method, implemented by computer, for dynamically monitoring of the production of at least one agricultural plot ($P^x$) on which develops at least one plant variety $V^x$ of a given species $E^x$,

by reference

to m (m being a positive integer $\geq$ 30, 50, 100, 150, 200 in an increased order of preference) different agricultural reference plots $P_m{}^r$, on which develop:

■ Implementation I1 ■ n (n being a positive integer $\geq$ 50, 100, 150, 200 in an increased order of preference) different reference plant varieties $V_n{}^r$ of the given species $E^x$, preferably at least one of the $V_n{}^r$ being $V^x$,

■ Implementation I2 ■ or a single plant variety $V_0{}^r$ of the given species $E^x$, $V_0{}^r$ being identical or different to $V^x$; $V^x$, $V_n{}^r$, $V_0{}^r$ having preferably at least one Agronomic Characteristic ($AC_p$ -p being a positive integer-) chosen in the group comprising -preferably composed of-Phenology feature(s) ($Ph_i$ - i being a positive integer); Use ($U_j$ - j=positive integer-);

☞ said method consisting essentially in implementing the following steps, in this order or not, at least one of these steps possibly being repeatable at least one time:

S.1. Collecting, preferably georeferenced, $P^x$-related and $P_m{}^r$-related data belonging to types $T_k$ (k being a positive integer) which comprises:

T.1. $P^x$-related and $P_m{}^r$ -related agronomic data, comprising $P^x$ sowing date referred to as $D^{sx}$ , $P_m{}^r$ sowing dates referred to as $D^s{}_m{}^r$, $Ph_i$, $U_j$, and $P_m{}^r$ yields referred to as $Y_m{}^r$ ;
T.2. historical weather $P^x$-related and $P_m{}^r$ -related data till at the latest the year before the current year;
T.3. current weather $P^x$-related data of the current year;
T.4. historical indicators of $V^x$ and/or $V_n{}^r$ and/or $V_0{}^r$ plant biomass produced on $P^x$ and $P_m{}^r$ (vegetation indices) as obtained by aerial imagery, preferably the Normalized Difference Vegetation Index (NDVI);
T.5. current indicators of $V^x$ plant biomass produced on $P^x$ (vegetation indices) as obtained by aerial imagery, preferably the Normalized Difference Vegetation Index (NDVI);

S.2. Determining:

■ Implementation I1 ■

at least one, preferably one, $V^x$-related Standard Profile $SP^{VxGDD}$ per $V^x$ and/or per $AC_p$, preferably $Ph_i$ and/or $U_j$, of at least one T4, as a function of $V^x$-Growing Degree Days (GDD), from date $D^{sx}$ of $V^x$ ; $SP^{VxGDD}$ being obtained from $V_n{}^r$-related Individual Profiles $IP^{v}{}_n{}^{rGDD}$, of at least one T4, on different agricultural reference plots $P_m{}^r$, at least from $V_n{}^r$ sowing date $D^s{}_m{}^r$ on each plot $P_m{}^r$;

■ Implementation I2 ■

at least one, preferably one, $V^x$-related Standard Profile $SP^{VxGDD}$ per $AC_p$, preferably $Ph_i$ and/or $U_j$, of at least one T4, as a function of $V^x$-Growing Degree Days (GDD), from date $D^{sx}$ of $V^x$ ; $SP^{VxGDD}$ being obtained from $V_0{}^r$-related Individual Profiles $IP^{V0rGDD}$, of at least one T4, on different agricultural reference plots $P_m{}^r$, at least from $V_0{}^r$ sowing date $D^s{}_m{}^r$ on each plot $P_m{}^r$;

S.3. Transforming:
$SP^{VxGDD}$ into $v^x$-related Standard Profile $SP^{CT}$, of at least one T4, as a function of $V^x$ Calendar Time (CT), on $P^x$, from closest date $D^{sx}$ to current given date $D^{cg}$;
S.4. Calculating:
$V^x$-related GDD on $P^x$, for a Future Period (FP) comprised between $D^{cg}$ and [$D^{cg}$ + q.time unit(s)] -q being a positive integer or decimal-;
S.5. Projecting:
$SP^{VxGDD}$ over FP;
S.6. Transforming:

- over FP projected-$SP^{VxGDD}$ into -over FP projected $V^x$-related Standard Profile $SP^{CT}$, of at least one T4 and/or T5, as a function of $V^x$ Calendar Time (CT) on $P^x$;

S.7. Forming a single profile [$SP^{CT}$/-over FP projected-$SP^{CT}$] from closest $D^{sx}$ to [$D^{cg}$ + FP];

S.8. Producing:

$V^x$-related Observed Profile $OP^{VxCT}$, of at least one T5, as a function of $V^x$-Calendar Time (CT), preferably directly from aerial imagery and possibly from $V^x$-related Observed Profile $OP^{VxGDD}$;

S.9. Comparing:

Single Profile [$SP^{CT}$/-over FP projected-$SP^{CT}$] with $OP^{VxCT}$;

S.10. Possibly Emitting an alert if $OP^{VxCT}$ diverts from $SP^{CT}$;

S.11. Implementing correcting actions (notably intrants) to match or tends to match:

- $OP^{VxCT}$, on one hand,
- with -over FP projected-$SP^{CT}$, on the other hand.

The dynamic, e.g. in real time, crop monitoring offered by the method according to the invention is highly interesting and valuable, since it makes it possible to monitor a large number of plots and extensive areas without the need to physically visit each field for evaluation. This results in significant time and resource savings, as well as greater relevance and responsiveness in decision making.

These time and resource savings find their origin, partially, in the fact plant biomass indicators (vegetation indices: e.g. NDVI) are remotely obtained.

Advantageously, in ■ Implementation I1 ■ , S2 includes the selection among the $V_n^r$-related individual profiles $IP{v_n}^{rGDD}$, of the $IP^{V_n^{rGDD}}$ corresponding to the yields $Y_{mv}^r$ of the $P_{mv}^r$ which are the $Nv^Y{_{mv}}^r$ greatest ones $Y_{mv}^r$, with respect to the total number $Nv^t$ of $IP^{VxGDD}$;

$[N^Y{_{mv}}^r/N']*100$ being preferably -in % and in an increasing order of preference- such as :

$$10 \leq [N^Y{_{mv}}^r/N^t]*100 \; ; 15 \leq [N^Y{_{mv}}^r/N^t]*100 ; 15 \leq [N^Y{_{mv}}^r/N^t]*100 \leq 35.$$

Advantageously, in ■ Implementation I2 ■ , S2 includes the selection among the $V_0^r$-related individual profiles $IP^{V0rGDD}$, of the $IP^{V0rGDD}$ corresponding to the yields $Y_{mv0}^r$ of the $P_{mv0}^r$ which are the $N^Y{_{mv0}}^r$ greatest ones $Y_{mv0}^r$, with respect to the total number $Nv_0t$ of $IP^{V0rGDD}$;

$[N^Y{_{mv0}}^r/Nv_0{^t}]*100$ being preferably -in % and in an increasing order of preference- such as :

$$10 \leq [N^Y{_{mv0}}^r/Nv_0{^t}]*100 \; ; 15 \leq [N^Y{_{mv0}}^r/Nv_0{^t}]*100 ; 15 \leq [N^Y{_{mv0}}^r/Nv_0{^t}]*100 \leq 35.$$

Preferably, in ■ Implementation I1 ■, the selection included in S2, comprises the following sub-steps:

S.2.1. collecting the $V_n^r$-related individual profiles $IP{^{V_n^r CT}}$ of at least one T4 of $V_n^r$ growth on $P_{mv}^r$, as a function of $V_n^r$ Calendar Time;

S.2.2. possibly in addition to or in place of the selection of step S2, the selection, among the $V_n^r$-related individual profiles $IP^{Vn^r CT}$, of the $IP^{V_n^r CT}$ corresponding to the yields $Y_{mvn}^r$ of the $P_{mvn}^r$ which are the $Nv^Y{_{mvn}}^r$ greatest ones $Y_{mvn}^r$, with respect to the total number $N_{Vnr}{^t}$ of $IP^{Vn^{rGDD}}$;

$[N^Y{_{mVn}}^r/N']*100$ being preferably -in % and in an increasing order of preference- such as :

$$10 \leq [N^Y{_{mVn}}^r/N^t]*100 \; ; 15 \leq [N^Y{_{mVn}}^r/N^t]*100 ; 15 \leq [N^Y{_{mVn}}^r/N^t]*100 \leq 35$$

S.2.3. transforming $IP{^{V_n^r CT}}$ into $IP{_{V_n^r}}^{GDD}$.

Preferably, in ■ Implementation I2 ■ , the selection included in S2, comprises the following sub-steps:

S.2.1. collecting the $V_0^r$-related individual profiles $IP^{V0rCT}$ of at least one T4 of $V_0^r$ growth on $P_{mv0}^r$, as a function of $V_0^r$ Calendar Time;

S.2.2. possibly in addition to or in place of the selection of step S2, the selection, among the $V_0^r$-related individual profiles $IP^{V0rCT}$, of the $IP^{V0rCT}$ corresponding to the yields $Y_{mv0}^r$ of the $P_{mv0}^r$ which are the $N^Y{_{mv0}}^r$ greatest ones $Y_{mv0}^r$, with respect to the total number $Nv_0{^t}$ of $IP^{V0rGDD}$;

$[N^Y{_{mv0}}^r/NV_0{^t}]*100$ being preferably -in % and in an increasing order of preference- such as :

$$10 \leq [N^Y{_{mv0}}^r/NV_0{^t}]*100 \; ; 15 \leq [N^Y{_{mv0}}^r/NV_0{^t}]*100 ; 15 \leq [N^Y{_{mv0}}^r/NV_0{^t}]*100 \leq 35$$

S.2.3. transforming $IP^{V_0 r CT}$ into $IP^{V_0 r GDD}$.

According to variant S2v of S2, in ■ Implementation I1 ■ , it includes the selection, among the $V_n^r$-related individual profiles $IP^{v_n r GDD}$, of the $IP^{v_n r GDD}$ which AUCs (Area Under Curve) are the $Nv'^{AUC}$ greatest ones AUCs with respect to the total number $Nv'n^{rt}$ of $IP^{v_n r GDD}$, $[Nv'n^{rAUC}/Nvn^{rt}]*100$ being preferably -in % and in an increasing order of preference- such as:

$$10 \leq [Nv'n^{rAUC}/Nv'n^{rt}]*100 \ ; \ 15 \leq [Nv'n^{rAUC}/Nv'n^{rt}]*100 \ ; \ 15 \leq [Nv'n^{rAUC}/Nv'n^{rt}]*100 \leq 35.$$

Preferably, in ■ Implementation I1 ■ , the selection of S2v, comprises the following sub-steps:

S.2v.1. collecting the $V_n^r$-related individual profiles $IP^{V_n r CT}$ of at least one T4 of $V_n^r$ growth on $P_{mVn}^r$, as a function of $V_n^r$ Calendar Time;

S.2v.2. possibly in addition to or in place of the selection of step S2, the selection, among the $V_n^r$-related individual profiles $IP^{V_n r GDD}$, of the $IP^{V_n r GDD}$ which AUCs (Area Under Curve) are the $Nv'n^{rAUC}$ greatest ones AUCs with respect to the total number $Nv'n^{rt}$ of $IP^{VxGDD}$, $[Nv'n^{rAUC}/Nvn^{rt}]*100$ being preferably -in % and in an increasing order of preference- such as:

$$10 \leq [Nv'n^{rAUC}/Nv'n^{rt}]*100 \ ; \ 15 \leq [Nv'n^{rAUC}/Nv'n^{t}]*100 \ ; \ 15 \leq [Nv'n^{rAUC}/Nv'n^{rt}]*100 \leq 35$$

S.2v.3. transforming $IP^{V_n r CT}$ into $IP^{V_n r GDD}$.

According to variant S2v of S2, in ■ Implementation I2 ■ , it includes the selection, among the $V_0^r$-related individual profiles $IP^{V_0 r GDD}$, of the $IP^{V_0 r GDD}$ which AUCs (Area Under Curve) are the $N_{V_0}^{r AUC}$ greatest ones AUCs with respect to the total number $N_{V'_0}^{rt}$ of $IP^{VxGDD}$, $[N_{V'_0}^{AUC}/N_{V'_0}^{rt}]*100$ being preferably -in % and in an increasing order of preference- such as:

$$10 \leq [N_{V'_0}^{rAUC}/N_{V'_0}^{rt}]*100 \ ; \ 15 \leq [N_{V'_0}^{rAUC}/N_{V'_0}^{rt}]*100 \ ; \ 15 \leq [N_{V'_0}^{rAUC}/N_{V'_0}^{rt}]*100 \leq 35.$$

Preferably, in ■ Implementation I2 ■ , the selection of S2v, comprises the following sub-steps:

S.2v.1. collecting the $V_0^r$-related individual profiles $IP^{V_0 r CT}$ of at least one T4 of $V_0^r$ growth on $P_{mv0}^r$, as a function of $V^x$ Calendar Time;

S.2v.2. possibly in addition to or in place of the selection of step S2, the selection, among the $V_0^r$-related individual profiles $IP^{V_0 r GDD}$, of the $IP^{V_0 r GDD}$ which AUCs (Area Under Curve) are the $Nv'_0^{rAuc}$ greatest ones AUCs with respect to the total number $Nv'_0^{rt}$ of $IP^{V_0 r GDD}$, $[Nv'_0^{rAUC}/Nv'_0^{rt}]*100$ being preferably -in % and in an increasing order of preference- such as:

$$10 \leq [Nv'_0^{rAUC}/Nv'_0^{r,t}]*100 \ ; \ 15 \leq [Nv'_0^{rAUC}/Nv'_0^{rt}]*100 \ ; \ 15 \leq [Nv'_0^{rAUC}/Nv'_0^{rt}]*100 \leq 35$$

S.2v.3. transforming $IP^{V_0 r CT}$ into $IP^{V_0 r GDD}$.

In an interesting possible way of carrying out the invention according to ■ Implementation I1 ■, S2 and S2v, S2.3 & S2v.3, respectively, include:

- Inputting of:

   * T1 data: $P_{mvn}^r$ sowing closest dates $D^{sx}$ ; and
   * T2 data: $P_{mvn}^r$ Daily temperature (DT) data,

- and calculating the temperature sums for some days of the CT, preferably each day, to get the GDD abscises of $IP^{V_n r GDD}$.

In an interesting possible way of carrying out the invention according to ∎ Implementation I2 ∎, S2 and S2v, S2.3 & S2v.3, respectively, include:

- Inputting of:

    * T1 data: $P_{mv0}^r$ sowing closest dates $D^{sx}$ ; and
    * T2 data: $P_{mv0}^r$ Daily temperature (DT) data,

- and calculating the temperature sums for some days of the CT, preferably each day, to get the GDD abscises of $IP^{V_0 rGDD}$.

Preferably, S3 comprises inputting of:

✔ at least one $SP^{VxGDD}$;
✔ T1 data: $P^x$ closest sowing date $D^{sx}$;
✔ T3 data: $P^x$ Daily Temperature (DT) data, from closest sowing date $D^{sx}$ to $D^{cg}$.

Preferably, S.4, S.5, S.6, S.7 comprise:

S.(4567).1. Inputting of:

✔ $SP^{VxGDD}$;

S.(4567).2. Inputting of:

✔ T2 data: $P^x$ daily temperature (DT) data for $P^x$ from a date $D°$ to a date $D'$ corresponding to $D^{cg}$ at the latest a year before the current year; $[D^1 - D°]$ being preferably greater or equal to -in years and in an increasing order of preference- 5; 10; 15; 18.;
✔ T3 data: current weather $P^x$-related data from $D^{sx}$ to $D^{cg}$;

S.(4567).3. Calculating from T2 data coming from S.7.2, the median $P^x$ daily temperature ($DT^m$) data for $P^x$ from $D°$ to $D^1$;

S.(4567).4. Creating an hybrid series by joining the T3 data from S.7.2 and the calculated T2 data from S.7.3; said series giving, preferably for each date, of FP, the $V^x$-related GDD on $P^x$, to produce a single profile [$SP^{GDD}$/-over FP projected-$SP^{GDD}$], of at least one T4 -preferably NDVI-, from closest $D^{sx}$ to $[D^{cg} + FP]$ and a single profile [$SP^{CT}$/-over FP projected-$SP^{CT}$] of at least one T4 -preferably NDVI-, from closest $D^{sx}$ to $[D^{cg} + FP]$.

Preferably, S8 comprises inputting of:

✔ T5 data (current indicators of $V^x$ plant biomass produced on $P^x$ );

from closest $D^{sx}$ to a current given date $D^g$.

As a variant of S9, comparison of S9 can be made between $SP^{GDD}$/projected $SP^{GDD}$ versus $OP^{VxGDD}$, instead of $SP^{CT}$/projected $SP^{CT}$ versus $OP^{VxCT}$.

According to a noteworthy feature of the invention, $Ph_i$ is Maturity Slot (MS) and/or Earliness (EI).

It can be appropriate, according to a feature of the invention, data collected in S1, notably $V_n^r$-related individual profiles $IP^{v_n rGDD}$, $V^x$-related standard profile $SP^{VxGDD}$ per $V^x$ and/or per ACp, be stored in at least one data base.

As outstanding feature of the invention, the S11 correcting actions (intrants) on the $P^x$ are chosen in the group comprising -preferably consisting in- watering, re-sowing, weeding, soil enrichment, scouting.

In another aspect, the invention relates to a computer program comprising a series of instructions which, when executed by a processor, implement a method according to the invention.

In another aspect, the invention relates to a data carrier on which is recorded the computer program according to the invention.

## Definitions

According to the terminology of this text, the following non limitative definitions could be taken into consideration for the sake of interpretation:

Every singular designates a plural and reciprocally.

$P^x$ agricultural plot.

$V^x$ : plant variety of a given species $E^x$ growing on $P^x$.

$P_m^r$ : agricultural reference plots on which develops $V_n^r$ or $V_0^r$.

$V_n^r$ : reference plant varieties for Vx of a given species Ex, in ■ Implementation I1 ■.

$V_0^r$: reference plant variety for Vx of a given species Ex, in ■ Implementation I2 ■.

ACp : agronomic characteristic.

Ph : Phenology.

$Y_{mvn}^r$ : Yield of $P_{mvn}^r$ in tons of harvested product (grains for $E^x$ = corn/maize or sunflower) per hectar.

$Y_{mv0}^r$ : Yield of $P_{mv0}^r$ in tons of harvested product (grains for $E^x$ = corn/maize or sunflower) per hectar.

MS : Maturity Slot.

EI : Earliness.

U : Use.

$D^{sx}$ : $V^x$ sowing date on $P^x$.

$D^s_m{}^r$ : $V_n^r$ sowing date on $P_m^r$.

Tk : $P^x$-related and $P_m^r$-related data belonging to a type k.

GDD : Growing Degree Days.

$SP^{VxGDD}$ : $V^x$-related standard profile per $V^x$ and/or per ACp.

$IP^{v_n{}^r GDD}$ : $V_n^r$-related individual profiles.

$IP^{V_0{}^r GDD}$ : $V_0^r$-related individual profiles.

$SP^{CT}$: Standard Profile of at least one Tk, as a function of $V^x$ Calendar Time (CT) on $P^x$.

$D^s$ : $V^x$ sowing date on $P^{x.}$.

DT : daily temperature.

$D^\circ$ : date $D^\circ$ from which starts the historical data T2 and/or T4, for instance, January 1st of the year corresponding to $N^{y^\circ}$ ($N^{y^\circ}$ being a positive integer, e.g. between 10 and 50, 18 for example) years before, at the latest, the year of $D^{cg}$ (defined below) and for example December 31st of the year before the year of $D^{cg}$.

$D^{cg}$ : current given date, i.e. date at which the method according to the invention is implemented, for instance the today's date.

FP : Future Period comprised between $D^{cg}$ and $[D^{cg} + y.time\ unit(s)]$ -y being a positive integer or decimal-.

$OP^{VxGDD}$ : $V^x$-related observed profile at the date $D^{cg}$.

*"Historical data"* denotes data from $D^\circ$ on $N^{y^\circ}$ years, as above defined.

*"Current data"* denotes data from the current year of implementation of the method according to the invention.

**Detailed description of the invention**

METHOD

The method according to the invention essentially consists in:

1) Building a library of reference standard profiles, specific to the variety $V^x$ of the species $E^x$, and/or to the species and/or to an Agronomic Characteristic ($AC_p$ -p being a positive integer = 1, 2-10 for instance).
$AC_p$ can be a phenology feature $Ph_i$ (i being a positive integer = 1, 2 to 5 for instance), such as, Maturity Slot (MS), Earliness (EY), namely e.g. : earliness niche of the variety under consideration (1 standard profile for early varieties, 1 standard profile for late varieties, etc), emergence of leaves and flowers and/or date of leaf colouring, *i.a.*.

2) Adapt the Standard Profile corresponding to the cultivated variety to the local context of the farm plot $P^x$ under consideration (sowing date, meteorology, etc.).

More particularly, the method in ■ Implementation I1 ■ comprises the steps S1-S11.

Step S1:

The collection of $P^x$-related and $P_m^r$-related data belonging e.g. to types $T_1$-$T_5$
Reference agricultural plots $P_m^r$ cultivated with n varieties $V_n^r$ of an $E^x$ species or with a variety $V_0^r$ of this species $E^x$, such as sunflower or maize, present relatively stable NDVI development profiles, when expressed not as a function of calendar time as is usually done, but as a function of thermal time (GDD) . Thermal time corresponds to the flow of time measured as a function of the temperatures 'accumulated' by the plant, by summing the average daily temperatures DT, as this is a stronger determinant of plant development than temporal flow per se.
Typically, 2 days at 15°C will be equivalent to one day at 30°C for the development of a corn plant. It therefore takes around 40°C to accumulate for a new leaf to appear, and it therefore takes either 4 days at 10°C or 2 days at 20°C (approximately, as in reality a "base" temperature has to be subtracted).
These temperature sums are expressed in GDD and are used as a way of normalizing development so as to be able to compare situations between them.
$m^v$ different agricultural reference plots $P_m^r$ can be used. $m^v$ is e.g. 300 plots $P_{mv}^r$. $E^x$ can be corn. $V^x$ and $V_m^r$ are e.g. a variety $V^1$ of corn.
$P^x$ & $P_m^r$-related data belonging to type $T_{k=1}$, $D^{sx}$, $D^s_m{}^r$, $AC_p$... preferably stored in a database, are collected.
$AC_p$ can be $AC_1$ : EI which can be EI1 very early, EI2 early, EI3 mid early , EI4 very late.
$P_m^r$ yields $Y_m^r$ are obtained from weighing and/or measures done by combine harvesters of the farmers who harvest the considered plots $P_m^r$.
$T_{k=2 \text{ to } 5}$ are also collected.

T.2. historical weather $P_m^r$ -related data can be Daily Temperature DT on a year from D° (see the D° above definition) years, e.g. from a D° on January 1st 2006 December 31st, 2023 (i.e. on 18 years).

T.3. current weather $P^x$-related data of the current year, for instance 2024;

T.4. historical indicators of $V^x$ and/or $V_n^r$ and/or $V_0^r$ plant biomass produced on $P^x$ and $P_m^r$ (vegetation indices) as obtained by aerial imagery, preferably the Normalized Difference Vegetation Index (NDVI);

T.5. current indicators of $V^x$ plant biomass produced on $P^x$ (vegetation indices) as obtained by aerial imagery, preferably the Normalized Difference Vegetation Index (NDVI).

Step S2:

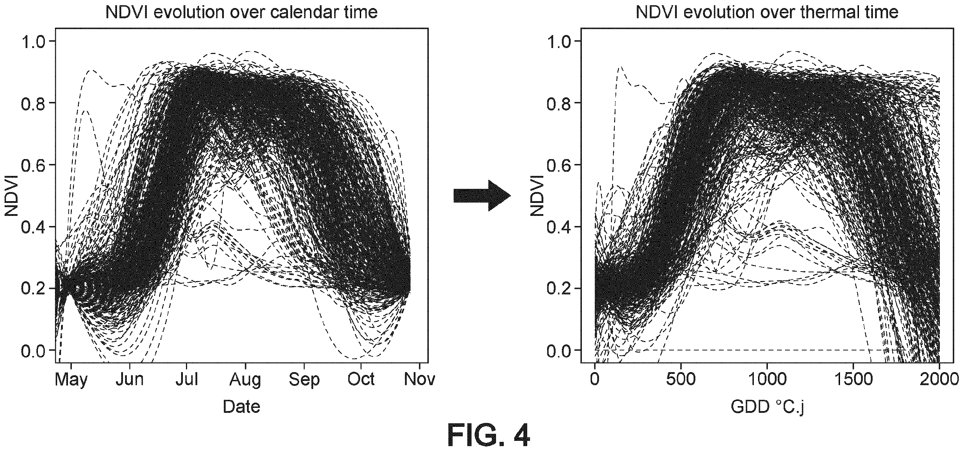

For example, $m^v$ = 300 plots $P_m^r$, 300 $E^x$ = corn $V_1^r$-related Individual e.g. NDVI Profiles $IP^V{}_n{}^{rCT}$, are drafted and transformed in 300 $E^x$ = corn $V_1^r$-related e.g. NDVI Individual Profiles $IP^v{}_n{}^{rGDD}$ from T2 data. See Figure 4.
The $P_m^r$ yields $Y_m^r$ of the 300 $E^x$ = corn $V_1^r$-related e.g. NDVI Individual Profiles $IP^V{}_n{}^{rGDD}$ are sought from T1 data.
The 300 $E^x$ = corn $V_1^r$-related e.g. NDVI Individual Profiles $IP^V{}_n{}^{rGDD}$ are divided into:

\* Z1 ($E^x$ = corn $V_1^r$-related e.g. *NDVI* Individual Profiles) $IP^{v}_n{}^{rGDD}$ for EI1 (very early $V_1^r$)

\* Z2 ($E^x$ = corn $V_1^r$-related e.g. *NDVI* Individual Profiles) $IP^{V}_n{}^{rGDD}$ for EI2 (early $V_1^r$)

\* Z3 ($E^x$ = corn $V_1^r$-related e.g. *NDVI* Individual Profiles) $IP^{v}_n{}^{rGDD}$ for EI3 (mid $V_1^r$)

\* Z4 ($E^x$ = corn $V_1^r$-related e.g. *NDVI* Individual Profiles) $IP^{v}_n{}^{rGDD}$ for EI4 (very late $V_1^r$)

,

$$Z1 + Z2 + Z3 + Z4 = 300$$

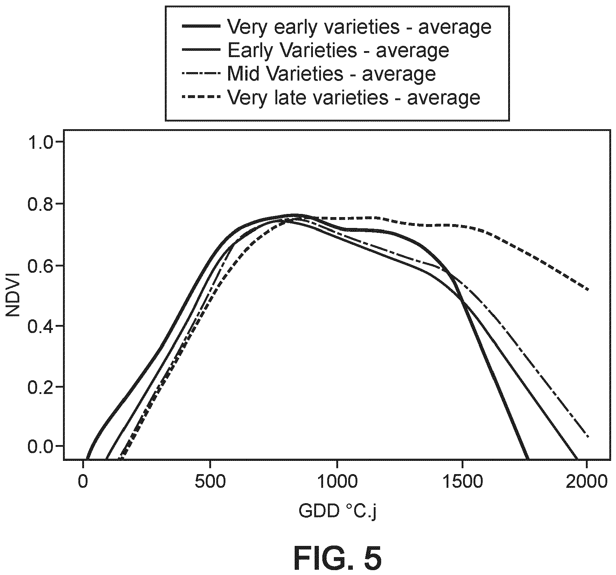

The e.g. 10% of Z1, Z2 ,Z3 and Z4 e.g. NDVI Individual Profiles, which correspond to the greater yields $Y_{mv}^r$ are selected and each converted in a $V^x$-related Standard Profile $SP^{VxGDD}$ per EI1, EI2, EI3 or EI4. See Figure 5.

Step S3:

Standard Profile $SP^{VxGDD}$ per EI1 for instance is input.
T1 data $D^{sx}$ (GDD) and T3 data : $P^x$ DT data, from closest sowing date $D^{sx}$ to $D^{cg}$, are input.
$SP^{VxGDD}$ per EI1 for instance is transformed into $V^x$-related Standard Profile $SP^{CT}$, from closest sowing date $D^{sx}$ to $D^{cg}$.

Steps S4.S5.S6.S7:

S.(4567).1 : $SP^{VxGDD}$ per EI1 for instance is input.
S.(4567).2 :

✓ T2 data: $P^x$ daily temperature (DT), from a date $D^\circ$ (for instance from January 1st, 2006 -$D^\circ$- to December 31st, 2023); $[D^1 - D^\circ]$ = 18 years;

✓ T3 data: current weather $P^x$-related data from $D^{sx}$ (for instance April 20th, 2024) to $D^{cg}$ (for instance August 20th,2024; knowing harvest can take place on October 15th, 2024).

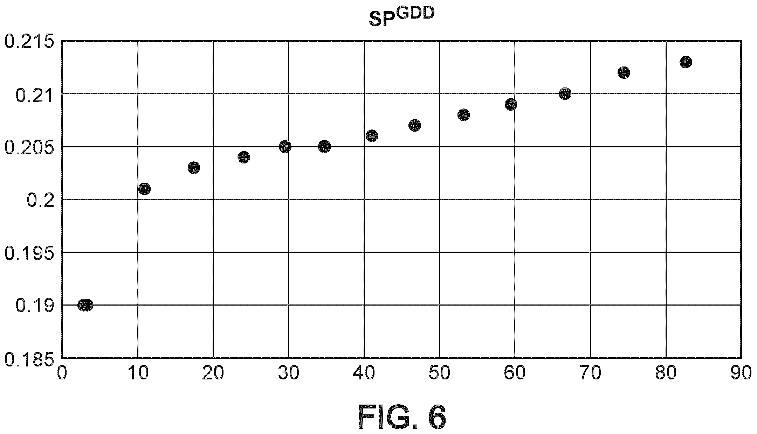

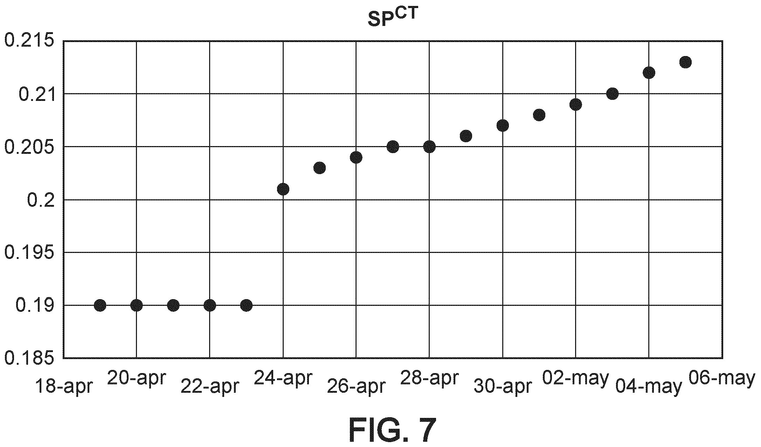

S.(4567).3 : Calculating from T2 data coming from S.(4567).2, the median $P^x$ daily temperature ($DT^m$) data for $P^x$ at least for some days, preferably each day, of some years, preferably each year, from $D^\circ$ (e.g. January 1st, 2006).
S.(4567).4 : Creating a hybrid series by joining the T3 data from S.(4567).2 and the calculated T2 data from S.(4567).3; said series giving, preferably for each date, of Future Period FP, from $D^{cg}$ to a day, preferably December 31st, 2024, of the year of $D^{cg}$ , the $V^x$-related GDD on $P^x$, to produce a single profile [$SP^{GDD}$/-over FP projected-$SP^{GDD}$] -See new Figure 6-, of NDVI-, from closest $D^{sx}$ (e.g. April 18th, 2024 in the following example) to [$D^{cg}$ + FP] (e.g. a day between $D^{sx}$ and December 31st, 2024, i.e. May 5th in the following example) and a single profile [$SP^{CT}$/-over FP projected-$SP^{CT}$] -See new Figure 7- of at least one T4 -preferably NDVI-, from closest $D^{sx}$ (April 18th, 2024 in the following example) to [$D^{cg}$ + FP] (May 5th, 2024 in the following example).
S.(4567).4 is illustrated in tables 1 & 2 below.

[Table 1]

| | | | | $D^{sx}$ | | | | | $D^{cg}$ |
|---|---|---|---|---|---|---|---|---|---|
| Day | Apr.15 | Apr.16 | Apr.17 | Apr.18 | Apr.19 | Apr.20 | Apr.21 | Apr.22 | Apr.23 |
| T3 : 2024 mean °C temperature | 14,75 | 8,35 | 7,45 | 5,15 | 8,85 | 6,45 | 4,15 | 4,25 | 4,85 |
| T2 : 2006-2023 median °C temperature | 12,2 | 10,85 | 12 | 10,6 | 12,3 | 12,75 | 14,1 | 13,7 | 14,25 |
| **Hybrid serie** | | | | **5,15** | **8,85** | **6,45** | **4,15** | **4,25** | **4,85** |

| Day | Apr.24 | Apr.25 | Apr.26 | Apr.27 | Apr.28 | Apr.29 | Apr.30 | May 1 | May 2 |
|---|---|---|---|---|---|---|---|---|---|
| T3 : 2024 mean °C temperature | FP | FP | FP | FP | FP | FP | FP | FP | FP |
| T2 : 2006-2023 median °C temperature | 13,6 | 12,55 | 12,6 | 11,5 | 11,2 | 12,3 | 11,7 | 12,45 | 12,3 |
| **Hybrid serie** | **13,6** | **12,55** | **12,6** | **11,5** | **11,2** | **12,3** | **11,7** | **12,45** | **12,3** |

| Day | May 3 | May 4 | May 5 |
|---|---|---|---|
| T3 : 2024 mean °C temperature | FP | FP | FP |
| T2 : 2006-2023 median °C temperature | 13,15 | 13,8 | 14,2 |
| **Hybrid serie** | **13,15** | **13,8** | **14,2** |

From the hybrid series, the cumulative temperature sum is calculated at each date.

This correspondence transforms SP$^{GDD}$, which gives the target NDVI for a given temperature sum, into SP$^{CT}$, which gives this target for a given date.

In the highlighted example of Table 2, the target of the standard profile SP$^{GDD}$ of T4 data (NDVI) is NDVI=0.204 for 24°C/day GDD of cumulative growth. From the GDD calculation obtained with the hybrid series, this sum is reached on April 26. The NDVI of the standard profile -over FP projected-SP$^{GDD}$ of T4 data (NDVI), is obtained for each date by taking the NDVI value corresponding to the temperature sum for that same date, and thus reconstitute the -over FP projected-SP$^{CT}$ for the considered plot P$^x$.

[Table 2]

| | | | | D$^{sx}$ | | | | | D$^{cg}$ |
|---|---|---|---|---|---|---|---|---|---|
| Day | Apr.15 | Apr.16 | Apr.17 | Apr.18 | Apr.19 | Apr.20 | Apr.21 | Apr.22 | Apr.23 |
| T3 : 2024 mean °C temperature | 14,75 | 8,35 | 7,45 | 5,15 | 8,85 | 6,45 | 4,15 | 4,25 | 4,85 |
| T2 : 2006-2023 median °C temperature | 12,2 | 10,85 | 12 | 10,6 | 12,3 | 12,75 | 14,1 | 13,7 | 14,25 |
| **Hybrid serie** | | | | **5,15** | **8,85** | **6,45** | **4,15** | **4,25** | **4,85** |
| **daily GDD** | | | | **0** | **2,85** | **0,45** | **0** | **0** | **0** |
| **cumulated GDD** | | | | **0** | **2,85** | **3,3** | **3,3** | **3,3** | **3,3** |
| **NVDI target according SP$^{GDD}$** | | | | 0 | 0,19 | 0,19 | 0,19 | 0,19 | 0,19 |

| Day | Apr.24 | Apr.25 | Apr.26 | Apr.27 | Apr.28 | Apr.29 | Apr.30 | May 1 | May 2 |
|---|---|---|---|---|---|---|---|---|---|
| T3 : 2024 mean °C temperature | FP | FP | FP | FP | FP | FP | FP | FP | FP |
| T2 : 2006-2023 median °C temperature | 13,6 | 12,55 | 12,6 | 11,5 | 11,2 | 12,3 | 11,7 | 12,45 | 12,3 |
| **Hybrid serie** | **13,6** | **12,55** | **12,6** | **11,5** | **11,2** | **12,3** | **11,7** | **12,45** | **12,3** |
| **daily GDD** | **7,6** | **6,55** | **6,6** | **5,5** | **5,2** | **6,3** | **5,7** | **6,45** | **6,3** |
| **cumulated GDD** | **10,9** | **17,45** | **24,05** | **29,55** | **34,75** | **41,05** | **46,75** | **53,2** | **59,5** |

(continued)

| Day | Apr.24 | Apr.25 | Apr.26 | Apr.27 | Apr.28 | Apr.29 | Apr.30 | May 1 | May 2 |
|---|---|---|---|---|---|---|---|---|---|
| **NVDI target according SP$^{GDD}$** | 0,201 | 0,203 | 0,204 | 0,205 | 0,205 | 0,206 | 0,207 | 0,208 | 0,209 |

| Day | May 3 | May 4 | May 5 |
|---|---|---|---|
| T3 : 2024 mean °C temperature | FP | FP | FP |
| T2 : 2006-2023 median °C temperature | 13,15 | 13,8 | 14,2 |
| **Hybrid serie** | **13,15** | **13,8** | **14,2** |
| **daily GDD** | **7,15** | **7,8** | **8,2** |
| **cumulated GDD** | **66,65** | **74,45** | **82,65** |
| **NVDI target according SPGDD** | 0,21 | 0,212 | 0,213 |

Step S8:

Producing $V^x$-related Observed Profile $OP^{VxCT}$, of at least one T5 data (NDVI), as a function of $V^x$- Calendar Time (CT) on $P^x$, directly from aerial imagery.

Step S9:

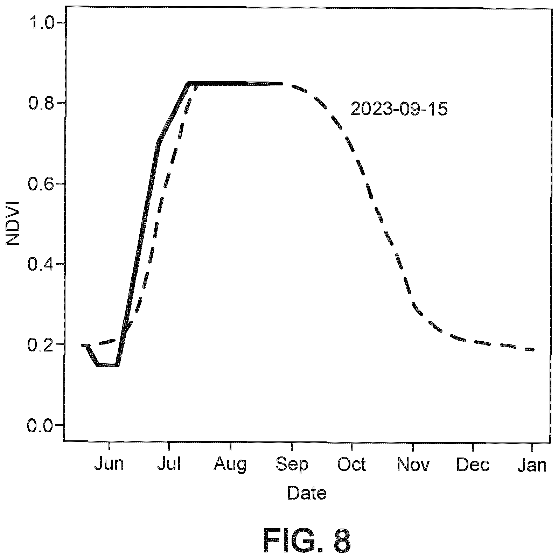

Comparing Single Profile [$SP^{CT}$/projected $SP^{CT}$] (dotted line on Figure 8) with $OP^{VxCT}$ (continuous line on Figure 8).

Step S10:

Possibly Emitting an alert if $OP^{VxCT}$ diverts from $SP^{CT}$.

Step S11:

Implementing correcting actions (intrants) to match or tends to match $OP^{VxCT}$, on one hand, with projected $SP^{CT}$, on the other hand.

DEVICE :

According to a second of its aspects, the invention concerns an electronic device for implementing the method according to the invention.

The electronic device capable of performing all or part of the process according to the invention may comprise an electronic assembly including a memory, at least one processing unit equipped, for example, with a microprocessor, and driven by at least one computer program.

In one embodiment, the process according to the invention is controlled by programs installed in whole or in part on the electronic device.

In another embodiment, the process according to the invention is controlled by a dedicated component (CpX) capable of processing data from the processing unit and installed in whole or in part on the electronic device.

In addition, the device also comprises communication means (CIE) in the form of network components (Wi-Fi, 3G/4G/5G, wired, RFID/NFC, Bluetooth, BLE, LPWan, VLC, etc.) that enable the device to receive data from entities connected to one or more communication networks and transmit processed data to such entities. These entities may be terminals enabling one or more users to communicate with the device.

According to one possibility, the device has the architecture of a computer. It is equipped with one or more processors capable of executing all types of computer programs, from operating systems to application software, written in compiled or interpreted languages. The various components of the device are linked together by a communication bus. If required, the device can be equipped with a communication system for communicating via protocols such as Bluetooth, Ethernet or WiFi with other systems, and for connecting to mobile or non-mobile telecommunications networks. The device also includes memory components for storing the data and programs required to operate the device.

SYSTEM

According to a third aspect, the invention concerns a system comprising the electronic device according to the invention, at least one computer server hosting this electronic device, at least one database and at least one terminal (PC, smart phone) enabling at least one user to communicate with the electronic device.

COMPUTER PROGRAM

According to a fourth aspect, the invention relates to at least one computer program comprising instructions for implementing the method according to the invention, when said instructions are executed by a processor of a computer processing circuit.

DATA CARRIERS

According to a fifth aspect, the invention relates to a data carrier on which at least one computer program according to the invention is recorded.

Data carriers can be any entity or device capable of storing programs. For example, the data carriers may comprise a storage medium, such as a ROM, for example a CD-ROM or a microelectronic circuit ROM, or a magnetic recording medium such as a hard disk, or more often a Flash memory. Moreover, the data carriers can be transmissible carriers such as an electrical or optical signal, which can be conveyed via an electrical or optical cable, by radio or by other means. In particular, programs according to the invention can be downloaded from an Internet-type network. Alternatively, the data carriers may be an integrated circuit in which the program is incorporated, the circuit being adapted to execute or to be used in the execution of the method according to the invention.

**Description of the figures**

The appended figures illustrate some information of the prior art and nonlimiting examples.

**Fig. 1**
[Fig. 1] figure 1 is a satellite image of an agricultural plot (P) on June 23, 2023 in 'real' color (Black&White on Figure 1) and converted into an NDVI signal level map.
**Fig. 2**
[Fig. 2] figure 2 represents the temporal evolution profiles of NDVI level on a plot P of A. Corn and B. Sunflower, from sowing to plant maturity, compared with the corresponding development stages
**Fig. 3**

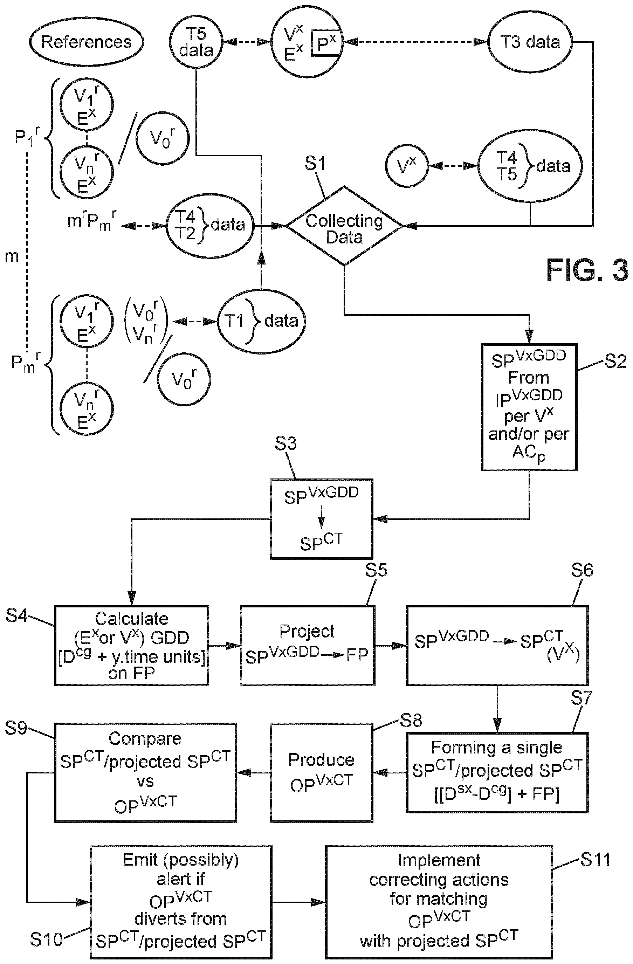

[Fig. 3] figure 3 is the flow chart of the method according to the invention.
**Fig. 4**
[Fig. 4] figure 4 shows a left graph comprising 300 $E^x$ = corn $V_1{}^r$-related Individual e.g. *NDVI* Profiles $IP^V{}_n{}^{rCT}$ (Calendar Time) and a right graph comprising the transformed 300 $E^x$ = corn $V_1{}^r$-related e.g. *NDVI* Individual Profiles $IP^V{}_n{}^{rGDD}$ (growing degree days = thermal time) from T2 data thermal time
**Fig. 5**
[Fig. 5] figure 5 is the representation of typical profiles identified for different corn earliness niches: $V^x$-related Standard Profile $SP^{VxGDD}$ per Earliness EI1, EI2, EI3 or EI4.
**Fig. 6**
[Fig. 6] figure 6 is a single profile $[SP^{GDD}$/-over FP projected-$SP^{GDD}]$ on a current given day $D^{cg}$= April 23$^{rd}$, 2023 for $V^x$ = EI3.
**Fig. 7**
[Fig. 7] figure 7 shows a single profile $[SP^{CT}$/-over FP projected-$SP^{CT}]$ on a current given day $D^{cg}$= April 23$^{rd}$, 2023 for $V^x$ = EI3.
**Fig. 8**
[Fig. 8] figure 8 is Single Profile $[SP^{CT}$/projected $SP^{CT}]$ (dotted line on Figure 6) with $OP^{VxCT}$ (solid line on Figure 6) on a current given day $D^g$= September 15$^{th}$, 2023.
**Fig. 9**

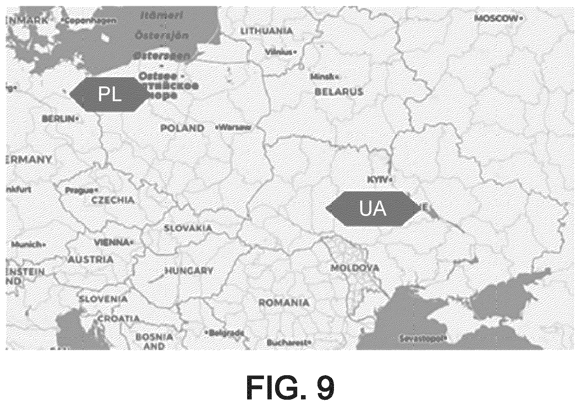

[Fig. 9] figure 9 shows a map localizing the plots $P^1$ : PL1, $P^2$ :UA1 of example 1.
**Fig. 10**

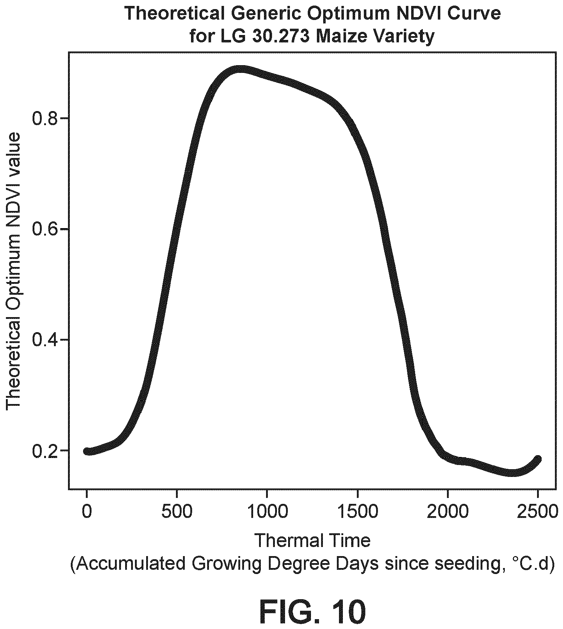

[Fig. 10] figure 10 shows the theoretical generic optimum NDVI curve for maize variety LG 30.273: $V^1$- standard NDVI Profile $SP^{V1GDD}$ per $V^1$ and for $P^1$ : PL1 and $P^2$: UA1) when expressed as a function of thermal time (example 1).
**Fig. 11**

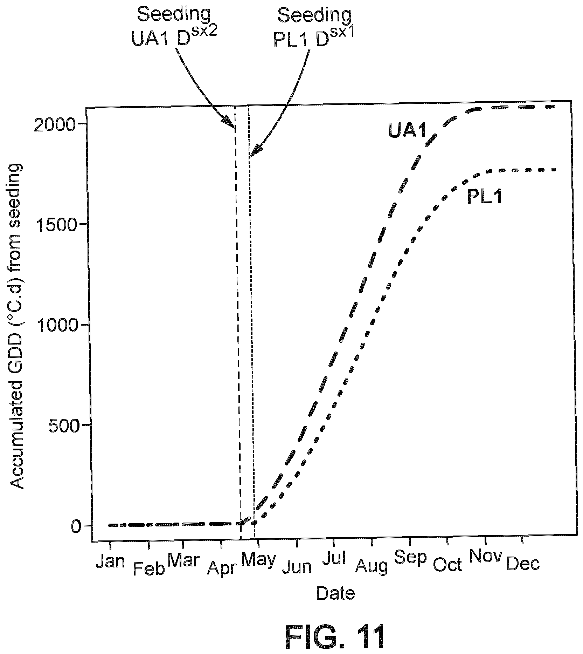

[Fig. 11] figure 11 is the theoretical growing degree days (GDD, °C.d) accumulation (median of observations for years 2005 to 2022) for PL1 and UA1, as computed on the day of seeding(example 1).

**Fig. 12**

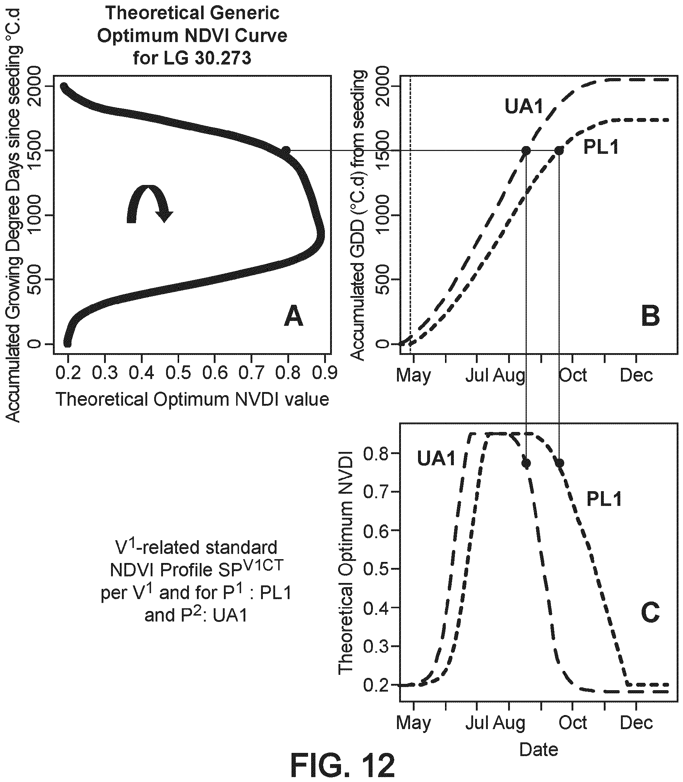

[Fig. 12] figure 12A is the same as the graph of figure 8 with inverted abscises-axis and y-axis. (example 1).
Fig. 12] figure 12B is the same as the graph of figure 9. (example 1).
Fig. 12] figure 12C is the graph of $V^1$-related standard NDVI Profile $SP^{V1GDD}$ per $V^1$ and for $P^1$ : PL1 and $P^2$ : UA1. (example 1).

**Fig. 13**

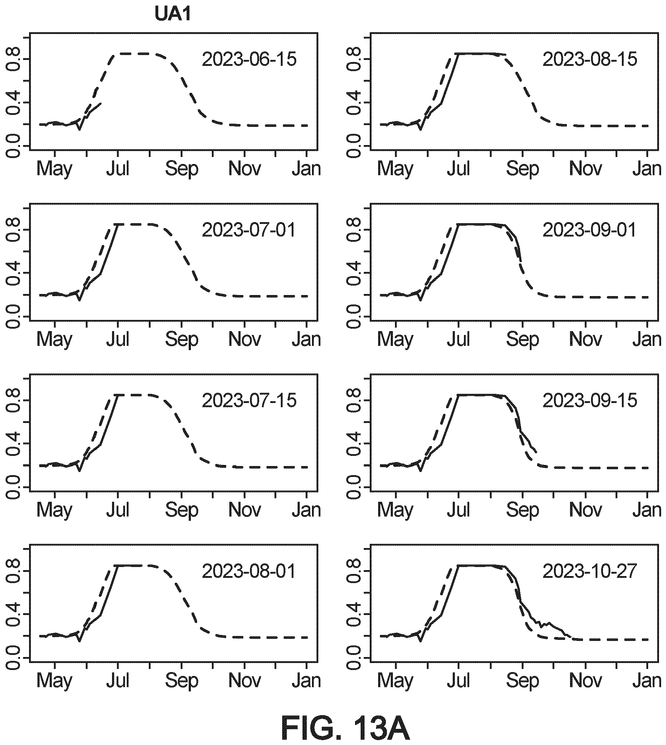

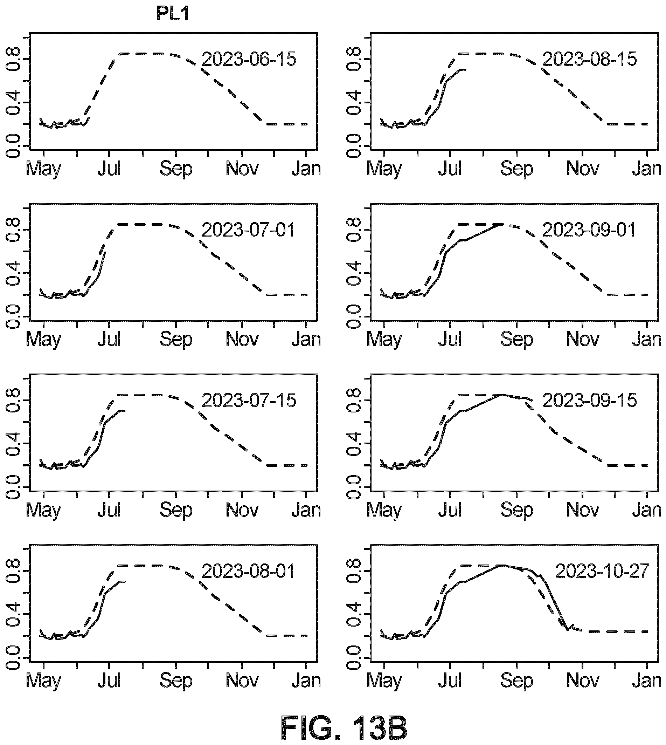

[Fig. 13] figure 13 shows comparison of the theoretical optimum NDVI curves (--) for UA1 and PL1 with the actual observed NDVI (-) at different dates $D^9$ during 2023 season. Single profile [$SP^{CT}$/projected $SP^{CT}$] from closest $D^{sx1}$ & $D^{sx2}$ to [$D^g$ + FP] versus $V^1$-related Observed Profile $OP^{VxCT}$ , as a function of $V^1$- Calendar Time (CT). (example 1).

**Fig. 14**

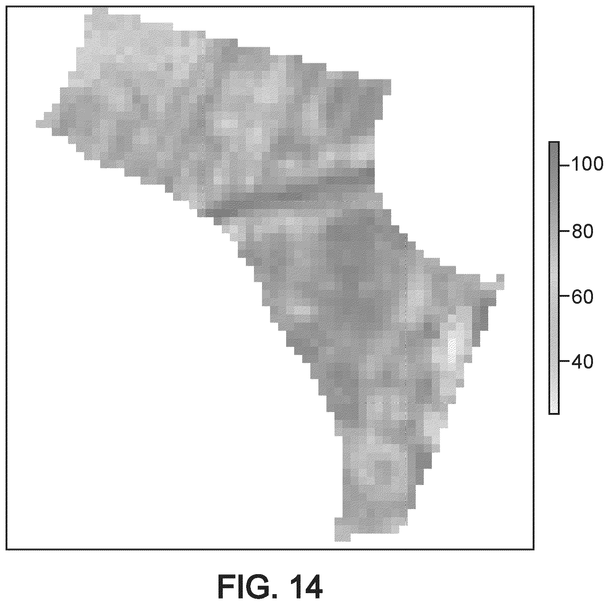

[Fig. 14] figure 14 shows Intra-field variation of the comparison between observed NDVI values in P1:PL1 with theoretical optimum NDVI, expressed in relative terms (%), on $D^g$ the 15th of July 2023. (example 1).

**Fig. 15**

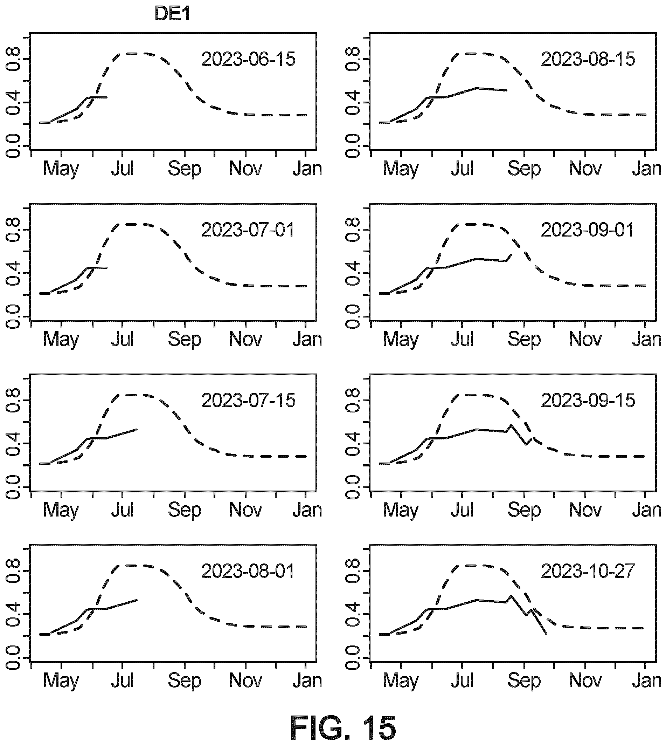

[Fig. 15] figure 15 shows comparison of the theoretical optimum NDVI curve (--) for plot $P^{x=3}$ : DE1 with the actual observed NDVI (-) at different dates during 2023 season. Single profile [$SP^{CT}$/projected $SP^{CT}$] from closest $D^{sx3}$ to [$D^g$ + FP] versus $V^{x=3}$-related Observed Profile $OP^{VxCT}$ , as a function of $V^1$- Calendar Time (CT). (example 2).

**Fig. 16**

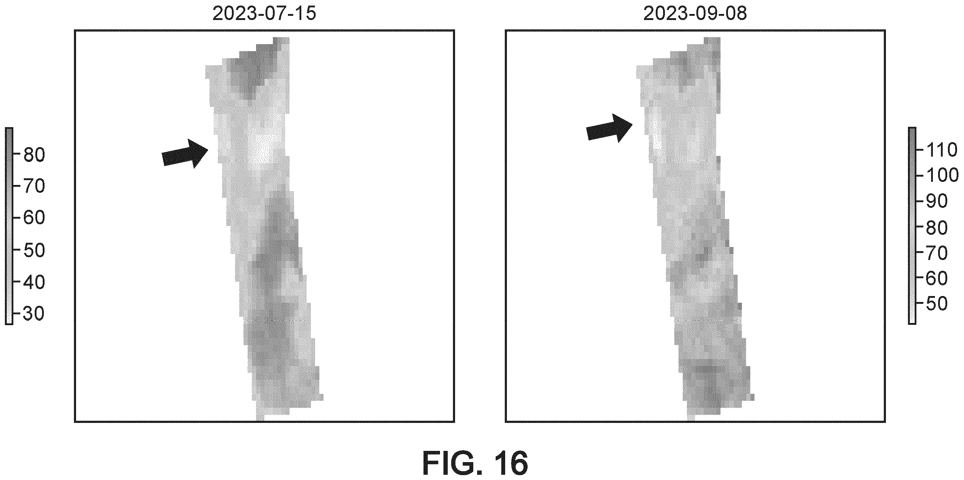

[Fig. 16] figure 16 shows Intra-field variation of the comparison between observed NDVI values in DE1 with theoretical optimum NDVI, expressed in relative terms (%), on the dates Dg : 15th of July 2023 and the 8th of September 2023

## EXAMPLES

The method here described was tested and applied on 1350 farming fields in summer 2023.

**Example 1** :

In example 1 two plots $P^x$ are considered, plot $P^1$ also referred to as PL1 was grown in North-West Poland while plot $P^2$ also referred to as UA1 was grown in Central Ukraine, approximately 1200 km away from plot PL1 (See Figure 9).
Both plots were sown with the same variety $V^x$ ($V^1$) Corn hybrid $E^x$ ($E^1$), so that they share a common genetic material, and were seeded at different dates as shown in the below table 3.

[Table 3]

| plots names | Country | Crop grown (variety $V^1$) | Seeding Date |
|---|---|---|---|
| $P^1$ : PL1 | Poland | Corn Hybrid LG 30.273 (Limagrain company) | 4/28/2023 |
| $P^2$ :UA1 | Ukraine | Corn Hybrid LG 30.273 (Limagrain company) | 4/17/2023 |

Step S1

Since same corn variety $V^1$ was used in both plots $P^1$ : PL1, $P^2$ : UA1. They exhibit an identical theoretical optimum NDVI curve ($V^1$- standard NDVI Profile $SP^{V1GDD}$ per $V^1$ and for $P^1$ : PL1 and $P^2$ : UA1) when expressed as a function of thermal time as shown in enclosed Fig.10.
When the season started in April 2023, this optimum NDVI profile was customized to suit the local context of $P^1$ : PL1 and $P^2$ : UA1. Indeed, $P^1$ : PL1 and $P^2$ : UA1 were seeded at different dates $D^{sx1}$ & $D^{sx2}$ and are situated in distinct geographical contexts, resulting in contrasted weather conditions. Consequently, the accumulation of growing degree days differs between the two locations.
To address this and since actual in-season weather conditions were unknown at the time of seeding, the theoretical GDD was initially computed accumulation as the median of GDD accumulations over the past 18 years (from 2005 to 2022) -T2 data- at each specific location $P^1$ : PL1 and $P^2$ : UA1. The actual growing degree days accumulation was then recomputed daily during the season, progressively incorporating real-time weather conditions observed up to the day prior to each calculation.
Enclosed Figure 11 shows the contrast in the theoretical growing degree days accumulations over calendar time (computed at the time of seeding) for both $P^1$ : PL1 and $P^2$ : UA1. Given that $P^1$ : PL1 was in a colder region and seeded later

than $P^2$ : UA1, its growing degree days accumulation remains lower than that of $P^2$ : UA1.

Steps S2- S3:

Based on this theoretical growing degree days accumulation (Figure 12B), the optimal NDVI curve for both fields ($V^1$-related standard NDVI Profile $SP^{V1CT}$ per $V^1$ and for $P^1$ : PL1 and $P^2$ : UA1) was then converted from thermal time accumulation to calendar dates:
As illustrated in Figure 12C showing $V^1$-related standard NDVI Profile $SP^{V1GDD}$ per $V^1$ and for $P^1$ : PL1 and $P^2$ : UA1, despite using the same variety $V^1$ in both plots $P^1$ : PL1 and $P^2$ : UA1, the expected behavior, as measured by NDVI, differs due to the impact of local growing conditions and practices.
As shown in FIG.12A, variety LG 30.273 should theoretically reach NDVI=0.8 after 1500°C.d has been accumulated from seeding if it is growing at its full potential. Based on historical data, 1500°C.d from sowing date $D^{sx}$ is theoretically reached on the 18th of August for UA1 and on the 18th of September for PL1 as shown in FIG.12B. As a conclusion, if LG 30.273 grows at its full potential, it should reach NDVI= 0.8 on resp. the 18th of August in UA1 and 18th of September in PL1 - as shown in C [$OP^{vxCT}$].

Steps S4 to S11:

During the early season from a date D° in April 2023, $V^1$-related standard NDVI Profiles $SP^{V1CT}$ per $V^1$ and for $P^1$ : PL1 and $P^2$: UA1 were computed and was then displayed and recomputed at different dates $D^g$ (2023-06-15;2023-07-01; 2023-07-15; 2023-08-01; 2023-08-15; 2023-09-01; 2023-09-15; 2023-10-27)_(Figure 13) _ {[S4: Calculating $V^x$-respectively-GDD on $P^x$, for a Future Period (FP) comprised between $D^g$ and [$D^g$ + y.time unit(s)=days] -y being such as the curves end on 2023.12.31}_{ S5: Projecting $SP^{VxCT}$ over FP mentioned in S4}_{S6:Transforming projected $SP^{VxGDD}$ into projected $V^x$-related Standard Profile $SP^{CT}$, of NDVI (T4), as a function of $V^1$ Calendar Time (CT) on $P^1$:PL1 & $P^2$:UA1}_ {S7: Forming a single profile [$SP^{CT}$/projected $SP^{CT}$] from closest $D^{sx1}$ & $D^{sx2}$ to [$D^g$ + FP]}. The recomputation at different dates $D^g$ was based on the real weather conditions encountered locally (such as daily temperatures DT -T3 data collected in S1-). The curves obtained and displayed for $V^1$ on P1:PL1 & $P^2$:UA1, are the dotted line curves of Figure 13 graphs. {S8 Inputting T5 data (current NDVI indicators -T5 data from S1- of $V^1$ plant biomass produced on P1:PL1 & $P^2$:UA1) from closest $D^{sx1}$ & $D^{sx2}$ for $D^{sx1}$ to a current given date $D^g$, to produce $V^1$-related Observed Profile $OP^{VxCT}$ , as a function of $V^1$-Calendar Time (CT) }. The curves obtained and displayed for $V^1$ on P1:PL1 & $P^2$:UA1, are the solid line curves of Figure 13 graphs. This approach allowed to comparatively {S9-S10-S11} monitor the actual NDVI evolution over time for P1 :PL1 & $P^2$:UA1, as depicted in Figure 13. Additionally, it allowed the mapping of intra-field variations (as shown in Figure 14: *Intra-field variation of the comparison between observed NDVI values in plot P1:PL1 with theoretical optimum NDVI, expressed in relative terms* (%), *on the 15th of July 2023.* Some parts of the *plot P1:PL1* were underperforming at this date, with observed NDVI less than 50% of the theoretical optimum value, while other parts of the *plot P1:PL1* were showing above-optimal NDVI values (>100%).
Notably, crops in both P1:PL1 & $P^2$:UA1, which experienced favorable growing conditions, exhibited NDVI development closely aligned with expectations (i.e., the Adapted Theoretical Optimal NDVI curve), thus validating the approach according to the invention.

**Example 2.**

In example 2, one plot $P^{x=3}$ is considered: DE1.
This plot is situated in eastern Germany and was seeded on the 10th of April 2023 with sunflower $E^{x=3}$(Limagrain variety $V^{x=3}$ :LG 53.77).
NDVI signal was monitored using the method described in example 1, which allowed to remotely identify suboptimal crop development on this $P^{x=3}$ : DE1, from June onward (due to unfavorable growing conditions), as illustrated in Figure 15.
Most of the suboptimal development of the crop by comparison to theoretical optimum NDVI came from a specific part of the field all along the season, as illustrated in Fig. 16: *Intra-field variation of the comparison between observed NDVI values in DE1 with theoretical optimum NDVI, expressed in relative terms* (%), *on the dates $D^g$ : 15th of July 2023 and the 8th of September 2023.* This figure 16 illustrates that most of the suboptimal NDVI development is associated with a specific area of the field exhibiting significant under-development, as indicated by the arrow .

**Claims**

**1.** Method, implemented by computer, for dynamically monitoring of the production of at least one agricultural plot ($P^x$) on which develops at least one plant variety $V^x$ of a given species $E^x$,

by reference
to m (m being a positive integer $\geq$ 30, 50, 100, 150, 200 in an increased order of preference) different agricultural reference plots $P_m^r$, on which develop:

■ Implementation I1 ■ n (n being a positive integer $\geq$ 50, 100, 150, 200 in an increased order of preference) different reference plant varieties $V_n^r$ of the given species $E^x$, preferably at least one of the $V_n^r$ being $V^x$,
■ Implementation I2 ■ or a single plant variety $V_0^r$ of the given species $E^x$, $V_0^r$ being identical or different to $V^x$;
$V^x$, $V_n^r$, $V_0^r$ having preferably at least one Agronomic Characteristic ($AC_p$ -p being a positive integer-) chosen in the group comprising -preferably composed of-Phenology feature(s) ($Ph_i$ - i being a positive integer); Use

($U_j$ - j=positive integer-);

said method consisting essentially in implementing the following steps, in this order or not, at least one of these steps possibly being repeatable at least one time:

S.1. Collecting, preferably georeferenced, $P^x$-related and $P_m^r$-related data belonging to types $T_k$ (k being a positive integer) which comprises:

T.1.$P^x$-related and $P_m^r$ -related agronomic data, comprising $P^x$ sowing date referred to as $D^{sx}$ , $P_m^r$ sowing dates referred to as $D^s{}_m^r$, $Ph_i$, $U_j$, and $P_m^r$ yields referred to as $Y_m^r$ ;
T.2. historical weather $P^x$-related and $P_m^r$-related data from a past date $D°$ till at the latest the year before the current year;
T.3. current weather $P^x$-related data of the current year;
T.4. historical indicators of $V^x$ and/or $V_n^r$ and/or $V_0^r$ plant biomass produced on $P^x$ and $P_m^r$ (vegetation indices) as obtained by aerial imagery, preferably the Normalized Difference Vegetation Index (NDVI);
T.5. current indicators of $V^x$ plant biomass produced on $P^x$ (vegetation indices) as obtained by aerial imagery, preferably the Normalized Difference Vegetation Index (NDVI);

S.2. Determining:

■ Implementation I1 ■

at least one, preferably one, $V^x$-related Standard Profile $SP^{VxGDD}$ per $V^x$ and/or per $AC_p$, preferably $Ph_i$ and/or $U_j$, of at least one T4, as a function of $V^x$-Growing Degree Days (GDD), from date $D^{sx}$ of $V^x$ ;
$SP^{VxGDD}$ being obtained from $V_n^r$-related Individual Profiles $IP^{v}{}_n^{rGDD}$, of at least one T4, on different agricultural reference plots $P_m^r$, at least from $V_n^r$ sowing date $D^s{}_m^r$ on each plot $P_m^r$;

■ Implementation I2 ■

at least one, preferably one, $V^x$-related Standard Profile $SP^{VxGDD}$ per $AC_p$, preferably $Ph_i$ and/or $U_j$, of at least one T4, as a function of $V^x$-Growing Degree Days (GDD), from date $D^{sx}$ of $V^x$ ;
$SP^{VxGDD}$ being obtained from $V_0^r$-related Individual Profiles $IP^{V0rGDD}$, of at least one T4, on different agricultural reference plots $P_m^r$, at least from $V_0^r$ sowing date $D^s{}_m^r$ on each plot $P_m^r$;

S.3. Transforming:
$SP^{VxGDD}$ into $V^x$-related Standard Profile $SP^{CT}$, of at least one T4, as a function of $V^x$ Calendar Time (CT), on $P^x$, from closest date $D^{sx}$ to current given date $D^{cg}$;
S.4. Calculating:
$V^x$-related GDD on $P^x$, for a Future Period (FP) comprised between $D^{cg}$ and [$D^{cg}$ + q.time unit(s)] -q being a positive integer or decimal-;
S.5. Projecting:
$SP^{VxGDD}$ over FP;
S.6. Transforming:
-over FP projected-$SP^{VxGDD}$ into -over FP projected $V^x$-related Standard Profile $SP^{CT}$, of at least one T4 and/or T5, as a function of $V^x$ Calendar Time (CT) on $P^x$;

S.7. Forming a single profile [$SP^{CT}$/-over FP projected-$SP^{CT}$] from closest $D^{sx}$ to [$D^{cg}$ + FP];

S.8. Producing:

$V^x$-related Observed Profile $OP^{VxCT}$, of at least one T5, as a function of $V^x$-Calendar Time (CT), preferably directly from aerial imagery and possibly from $V^x$-related Observed Profile $OP^{VxGDD}$;

S.9. Comparing Single Profile [$SP^{CT}$/-over FP projected-$SP^{CT}$] with $OP^{VxCT}$;

S.10. Possibly Emitting an alert if $OP^{VxCT}$ diverts from $SP^{CT}$;

S.11. Implementing correcting actions (intrants) to match or tends to match:

  - $OP^{VxCT}$, on one hand,
  - with -over FP projected-$SP^{CT}$, on the other hand.

2. Method according to claim 1 wherein in ■ Implementation I1 ■, S2 includes the selection among the $V_n^r$-related individual profiles $IP^{V_n^r GDD}$, of the $IP^{V_n^r GDD}$ corresponding to the yields $Y_{mv}^r$ of the $P_{mv}^r$ which are the $Nv_{mv}^{Y\,r}$ greatest ones $Y_{mv}^r$, with respect to the total number $Nv^t$ of $IP^{VxGDD}$;

[$N_{mv}^{Y\,r}/N^t$]*100 being preferably -in % and in an increasing order of preference- such as :

$$10 \leq [N_{mv}^{Y\,r}/N^t]*100 \;\; ; 15 \leq [N_{mv}^{Y\,r}/N^t]*100 ; 15 \leq [N_{mv}^{Y\,r}/N^t]*100 \leq 35.$$

3. Method according to claim 2 wherein in ■ Implementation I1 ■, the selection included in S2, comprises the following sub-steps:

S.2.1. collecting the $V_n^r$-related individual profiles $IP^{V_n^r CT}$ of at least one T4 of $V_n^r$ growth on $P_{mv}^r$, as a function of $V_n^r$ Calendar Time;

S.2.2. possibly in addition to or in place of the selection of step S2, the selection, among the $V_n^r$-related individual profiles $IP^{V_n^r CT}$, of the $IP^{V_n^r CT}$ corresponding to the yields $Y_{mvn}^r$ of the $P_{mvn}^r$ which are the $Nv_{mvn}^{Y\,r}$ greatest ones $Y_{mvn}^r$, with respect to the total number $N_{Vnr}^t$ of $IP^{Vn^r GDD}$;

[$N_{mVn}^{Y\,r}/N'$]*100 being preferably -in % and in an increasing order of preference- such as :

$$10 \leq [N_{mVn}^{Y\,r}/N^t]*100 \;\; ; 15 \leq [N_{mVn}^{Y\,r}/N^t]*100 ; 15 \leq [N_{mVn}^{Y\,r}/N^t]*100 \leq 35$$

S.2.3. transforming $IP^{Vn^r\,CT}$ into $IP^{V_n^r\,GDD}$.

4. Method according to claim 1 wherein a variant S2v of S2, in ■ Implementation I1 ■, includes the selection, among the $V_n^r$-related individual profiles $IP^{V_n^r GDD}$, of the $IP^{V_n^r GDD}$ which AUCs (Area Under Curve) are the $Nv'^{AUC}$ greatest ones AUCs with respect to the total number $Nv'n^{rt}$ of $IP^{V_n^r GDD}$, [$Nv'n^{rAUC}/Nvn^{rt}$]*100 being preferably -in % and in an increasing order of preference- such as:

$$10 \leq [Nv'n^{rAUC}/Nv'n^{rt}]*100 \;\; ; 15 \leq [Nv'n^{rAUC}/Nv'n^{rt}]*100 ; 15 \leq [Nv'n^{rAUC}/Nv'n^{rt}]*100 \leq 35.$$

5. Method according to claim 4 wherein in ■ Implementation I1 ■, the selection of S2v included in S2, comprises the following sub-steps:

S.2v.1. collecting the $V_n^r$-related individual profiles $IP^{V_n^r CT}$ of at least one T4 of $V_n^r$ growth on $P_{mVn}^r$, as a function of $V_n^r$ Calendar Time;

S.2v.2. possibly in addition to or in place of the selection of step S2, the selection, among the $V_n^r$-related individual profiles $IP^{V_n^r GDD}$, of the $IP^{V_n^r GDD}$ which AUCs (Area Under Curve) are the $Nv'n^{rAUC}$ greatest ones AUCs with respect to the total number $Nv'n^{rt}$ of $IP^{VxGDD}$, [$Nv'n^{rAUC}/Nvn^{rt}$]*100 being preferably -in % and in an increasing order of preference- such as:

$$10 \leq [Nv'n^{rAUC}/Nv'n^{rt}]*100 \;\; ; 15 \leq [Nv'n^{rAUC}/Nv'^t]*100 ; 15 \leq [Nv'n^{rAUC}/Nv'n^{rt}]*100 \leq 35$$

S.2v.3. transforming $IP^{V_n^r\,CT}$ into $IP^{V_n^r\,GDD}$.

6. Method according to claim 3 or 5 wherein according to ■ Implementation I1 ■, S2 and S2v, S2.3 & S2v.3, respectively, include:

- Inputting of:

* T1 data: $P_{mvn}{}^r$ sowing closest dates $D^{sx}$ ; and
* T2 data: $P_{mvn}{}^r$ Daily temperature (DT) data,

- and calculating the temperature sums for some days of the CT, preferably each day, to get the GDD abscises of IP $V_n{}^{r\ GDD}$.

7. Method according to at least one of the preceding claims, wherein, S3 comprises inputting of:

✓ at least one $SP^{V_x GDD}$;
✓ T1 data: $P^x$ closest sowing date $D^{sx}$;
✓ T3 data: $P^x$ Daily Temperature (DT) data, from closest sowing date $D^{sx}$ to $D^{cg}$.

8. Method according to at least one of the preceding claims, wherein, S.4, S.5, S.6, S.7 comprises:

S.(4567).1. Inputting of:

✓ $SP^{V_x GDD}$;

S.(4567).2. Inputting of:

✓ T2 data: $P^x$ daily temperature (DT) data for $P^x$ from a date $D°$ to a date D' corresponding to $D^{cg}$ at the latest a year before the current year; [$D^1$ - $D°$] being preferably greater or equal to -in years and in an increasing order of preference- 5; 10; 15; 18.;
✓ T3 data: current weather $P^x$-related data from $D^{sx}$ to $D^{cg}$;

S.(4567).3. Calculating from T2 data coming from S.(4567).2, the median $P^x$ daily temperature ($DT^m$) data for $P^x$ from $D°$ to $D^1$;
S.(4567).4. Creating an hybrid series by joining the T3 data from S.(4567).2 and the calculated T2 data from S.7.3; said series giving, preferably for each date, of FP, the $V^x$-related GDD on $P^x$, to produce a single profile [$SP^{GDD}$/-over FP projected-$SP^{GDD}$], of at least one T4 -preferably NDVI-, from closest $D^{sx}$ to [$D^{cg}$ + FP] and a single profile [$SP^{CT}$/-over FP projected-$SP^{CT}$] of at least one T4 -preferably NDVI-, from closest $D^{sx}$ to [$D^{cg}$ + FP].

9. Method according to at least one of the preceding claims, wherein, S8 comprises inputting of:

✓ T5 data (current indicators of $V^x$ plant biomass produced on $P^x$ );

from closest $D^{sx}$ to a current given date $D^g$.

10. Method according to at least one of the preceding claims, wherein, the $Ph_i$ is Maturity Slot (MS) and/or Earliness (EI).

11. Method according to at least one of the preceding claims, wherein, data collected in S1, notably $V_n{}^r$-related individual profiles $IP^{v_n{}^r GDD}$, $V^x$-related standard profile $SP^{V_x GDD}$ per $V^x$ and/or per ACp, are stored in at least one data base.

12. Method according to at least one of the preceding claims, wherein the S11 correcting actions (intrants) on the $P^x$ are chosen in the group comprising-preferably consisting in- watering, re-sowing, weeding, soil enrichment, scouting.

13. Computer program comprising a series of instructions which, when executed by a processor, implement a method according to at least one of claims 1 to 12.

14. Data carrier on which is recorded the computer program according to claim 13.

FIG. 1

FIG. 2

FIG. 3

FIG. 4

FIG. 5

**FIG. 6**

EP 4 685 713 A1

FIG. 7

FIG. 8

FIG. 9

Theoretical Generic Optimum NDVI Curve
for LG 30.273 Maize Variety

FIG. 10

FIG. 11

FIG. 12

FIG. 13A

FIG. 13B

**FIG. 14**

**FIG. 15**

2023-07-15      2023-09-08

FIG. 16

Europäisches
Patentamt
European
Patent Office
Office européen
des brevets

## EUROPEAN SEARCH REPORT

**Application Number**

EP 24 30 6225

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/202227 A1 (MATHUR ANKUR [US] ET AL) 14 July 2016 (2016-07-14)<br>* paragraph [0022] *<br>* paragraph [0034] *<br>* paragraph [0047] - paragraph [0049] *<br>* paragraph [0054] - paragraph [0057] *<br>* paragraph [0072] - paragraph [0077] *<br>* paragraph [0089] - paragraph [0094] *<br>----- | 1-14 | INV.<br>G06Q10/06<br>G06Q50/02<br>A01B79/00 |
| A | US 2012/109614 A1 (LINDORES ROBERT J [NZ]) 3 May 2012 (2012-05-03)<br>* figures 5, 6A, 6B *<br>* paragraphs [0053] - [0060] *<br>* paragraph [0073] - paragraph [0076] *<br>* paragraph [0100] - paragraph [0104] *<br>----- | 1-14 | |
| A | LI ZHENHAI ET AL: "Comparison and transferability of thermal, temporal and phenological-based in-season predictions of above-ground biomass in wheat crops from proximal crop reflectance data", REMOTE SENSING OF ENVIRONMENT, ELSEVIER, XX,<br>vol. 273, 8 March 2022 (2022-03-08), XP086998229,<br>ISSN: 0034-4257, DOI: 10.1016/J.RSE.2022.112967<br>[retrieved on 2022-03-08]<br>* Sections 2.3-2.6, 3.4 *<br>----- | 1-14 | TECHNICAL FIELDS SEARCHED (IPC)<br><br>G06Q<br>A01B |

The present search report has been drawn up for all claims

| Place of search | Date of completion of the search | Examiner |
|---|---|---|
| Munich | 8 January 2025 | Shivaldova, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6225

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | Publication date | Patent family member(s) | | Publication date |
|---|---|---|---|---|
| US 2016202227 A1 | 14-07-2016 | AU | 2016200178 A1 | 28-07-2016 |
| | | AU | 2017228695 A1 | 05-10-2017 |
| | | CA | 2917515 A1 | 14-07-2016 |
| | | CN | 105787801 A | 20-07-2016 |
| | | EP | 3046066 A1 | 20-07-2016 |
| | | US | 2016202227 A1 | 14-07-2016 |
| | | US | 2016253595 A1 | 01-09-2016 |
| US 2012109614 A1 | 03-05-2012 | NONE | | |

EPO FORM P0459

For more details about this annex : see Official Journal of the European Patent Office, No. 12/82